# EUROPEAN PATENT APPLICATION

(11) **EP 1 890 235 A1**
(43) Date of publication of application: **20.02.2008**
(21) Application number: 06118310.9
(22) Date of filing: 02.08.2006
(51) Int. Cl.: G06F 11/36

(54) **Test case management**

(71) Applicant: Microsoft Corporation, Redmond WA 98052 (US)
(72) Inventor: Grimes, Robert Microsoft European Product Development Centre (EPDC), 18, Dublin (IE)
(74) Representative: Wallis, Helen Frances Mary

(57) **Abstract**

A test case management tool and a method of generating test instructions are described in which mapping data associated with a software product is accessed. This mapping data maps between actions and elements of the software product's user interface. A subset of the mapping data is identified based on an input received and then test instructions can be generated using the identified subset of mapping data and a model of the user interface of the software product which arranges the user interface elements in a hierarchical structure.

## Description

### BACKGROUND

The user interface (UI) of a software product (such as an application or an operating system) includes a large number of elements such as dialogs (e.g. pop-up windows, screens etc) each of which may contain one or more controls, such as text areas or boxes, buttons with text etc. The UI of a software product may contain very large numbers (e.g. thousands) of dialogs and an even larger number of controls. As a product is developed, the UI changes and this can introduce defects in the UI, such as overlapping boxes, truncated text on buttons etc. Such defects can be introduced in each new build of the product and testing for such defects is time consuming and costly as the UI must be fully exercised continually throughout the product development life cycle.

Furthermore, software products are often provided in many different language versions and the process of converting a software product from the initial language it was written in to other languages is known as 'localisation'. Typically the localisation is done by translating all the string elements within the user interface (UI) of the product and any other language specific parts (e.g. hotkeys, coordinates, sizes) and then re-building the product to produce the language specific version. Localisation can result in similar defects being introduced to the UI in addition to errors in the translation. This localised product then requires extensive testing before it can be shipped to a customer. This is very expensive and results in slow delivery of localised versions of software.

Currently, testing of a UI is done manually by a tester who navigates through the UI whilst following lists of instructions, (also referred to as 'test cases'), which detail how to display each element of the UI. These test cases are written in one language (usually English) which means that where a tester is testing a UI in a different language, they must run two versions of the software product side by side (e.g. the English version and the second language version) and then perform the same actions on each software product. This results in slow and inefficient testing of a software product. Furthermore, when changes occur in a UI, for example, a button is re-labelled from 'Yes' to 'OK' or the menu structure is changed, all the related test cases must be changed which is costly and time consuming.

The problems relating to testing and test cases are exacerbated when the software product involves dynamic UI, such that the exact appearance of a UI element depends upon the exact sequence of steps prior to the display of the UI element. For example, where a dialog includes a number of different tabs (e.g. the 'Options' dialog in Microsoft Word (trade mark) has tabs such as 'Security', 'Spelling and Grammar', 'Track Changes' etc) the dialog will look different depending upon which tab has been selected. These different versions of the same UI element (a dialog in this case) are referred to as states. Consequently, where the software product involves dynamic UI, the test cases for the product must include a test case which displays each of the different states of a UI element, which can increase the number of test cases enormously.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A test case management tool and a method of generating test instructions are described in which mapping data associated with a software product is accessed. This mapping data maps between actions and elements of the software product's user interface. A subset of the mapping data is identified based on an input received and then test instructions are generated using the identified subset of mapping data and a model of the user interface of the software product which arranges the user interface elements in a hierarchical structure.

The present example provides test case management tool comprising: a processor; an output for outputting a test case; and a memory arranged to store executable instructions arranged to cause the processor to: access a first data store comprising mapping data associated with a software product, the software product comprising a user interface comprising a plurality of user interface elements and the mapping data comprising one or more data pairs associating an action identifier and a user interface element identifier, wherein each user interface element identifier is associated with one of the plurality of user interface elements; identify subset of the mapping data in response to an input received; access a second data store comprising a model of the user interface, the model comprising the plurality of user interface element identifiers arranged in a hierarchical structure; and create a test case based on the identified subset of the mapping data and the model.

Advantageously this tool enables the quick and efficient generation of test cases which can be updated easily and quickly. Furthermore, the management tool is flexible and can easily accommodate changes in user interface, structure and user interface terminology. Additionally the tool enables test cases to be produced in any language into which a software product has been localised. The test cases may also be produced in a combination of languages, e.g. instructions provided in the native language of the tester (e.g. English) with the strings from the application being in the language of the version of the product (e.g. French, for testing the French localised version of an application).

The tool may further comprise at least one of: the first data store and the second data store.

The first data store and the second data store may, in some examples, be combined.

The mapping data may further comprise: one or more additional data pairs, each additional data pair associating an additional action identifier and one of a plurality of task identifiers; and data associating the task identifier with one or more data pairs associating an action identifier and a user interface element identifier.

Use of tasks provides a more efficient and flexible way of defining mapping data which can be easily updated should the structure of the software model be changed.

The memory may be further arranged to store executable instructions arranged to cause the processor to: identify a subset of the mapping data associated with a first test; expand each data pair in the subset of the mapping data associated with the first test based on the hierarchical structure of the model to create a set of expanded mappings associated with the first test, each expanded mapping comprising one or more user interface element identifiers; identify the user interface element identifiers in each of the set of expanded mappings associated with the first test; and store the identified user interface element identifiers associated with an identifier for the first test.

Advantageously the tool enables the identification of any user interface elements which are not covered by test cases and also can quickly and efficiently determine which test cases need to be regenerated or run for a cut down version of a software product or when elements in the user interface are changed.

The memory may be further arranged to store executable instructions arranged to cause the processor to: select one of the plurality of user interface elements; classify the selected user interface element based on the hierarchical structure of the model; and assign a risk level associated with the selected user interface element based on the classification.

Advantageously the tool provides an efficient way of determining which user interface elements do not require testing and which require intensive testing because of their higher assigned risk level.

Each action identifier may be selected from a plurality of action identifiers, the plurality of action identifiers comprising identifiers for at least two of: click, type, select, double click, launch and run task.

A second example provides a method of generating test instructions comprising: accessing a first data store comprising mapping data associated with a software product, the software product comprising a user interface comprising a plurality of user interface elements and the mapping data comprising one or more data pairs associating an action identifier and a user interface element identifier, wherein each user interface element identifier is associated with one of the plurality of user interface elements; identifying a subset of the mapping data in response to an input received; accessing a second data store comprising a model of the user interface, the model comprising the plurality of user interface element identifiers arranged in a hierarchical structure; creating the test instructions based on the identified subset of the mapping data and the model.

The mapping data may further comprise: one or more additional data pairs, each additional data pair associating an additional action identifier and one of a plurality of task identifiers; and data associating the task identifier with one or more data pairs associating an action identifier and a user interface element identifier.

Creating the test instructions based on the identified subset of the mapping data and the model may comprise: expanding each data pair in the subset of the mapping data based on the hierarchical structure of the model to create a set of expanded mappings, each expanded mapping comprising one or more user interface element identifiers; and creating the test instructions based on the set of expanded mappings.

In another example, creating the test instructions based on the identified subset of the mapping data and the model may comprise: expanding each data pair in the subset of the mapping data based on the hierarchical structure of the model to create a set of expanded mappings, each expanded mapping comprising one or more user interface element identifiers; accessing data relating one or more of the user interface element identifiers in an expanded mapping; and creating the test instructions based on the set of expanded mappings and the accessed data.

This has the advantage that the test instructions can be generated in any language into which the software product has been translated and/or the test instructions may include additional data as to how an action is performed, such as the required position of a mouse when it is clicked or the required string which must be entered in a box etc.

The data relating to one or more elements may comprise one or more of:
position data relating to the one or more user interface element identifiers and a library of strings in a selected language associated with the one or more user interface element identifiers.

The method may further comprise: outputting the test instructions in plain text or in executable code.

By providing test instructions in executable code these can be input to software applications which can then perform automated test routines for various applications.

Each action identifier may be selected from a plurality of action identifiers, the plurality of action identifiers comprising identifiers for at least two of: click, type, select, double click, launch and run task.

A third example provides a computer program comprising computer program code means adapted to perform all the steps of any of the methods described above when said program is run on a computer.

The computer program may be embodied on a computer readable medium.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a test case management tool;
FIG. 2 shows a graphical representation of a first user interface model;
FIG. 3 shows an example flow diagram for the method of the generation of a test case;
FIG. 4 shows a graphical representation of a second UI model;
FIG. 5 shows a graphical representation of a third UI model;
FIG. 6 shows a graphical representation of a fourth UI model;
FIG. 7 is an example flow diagram of a method of generating data mapping test cases and UI elements;
FIG. 8 is an example flow diagram showing a method of analysis of a UI model; and
FIG**.** 9 shows an example method of capturing data for a UI model.
Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

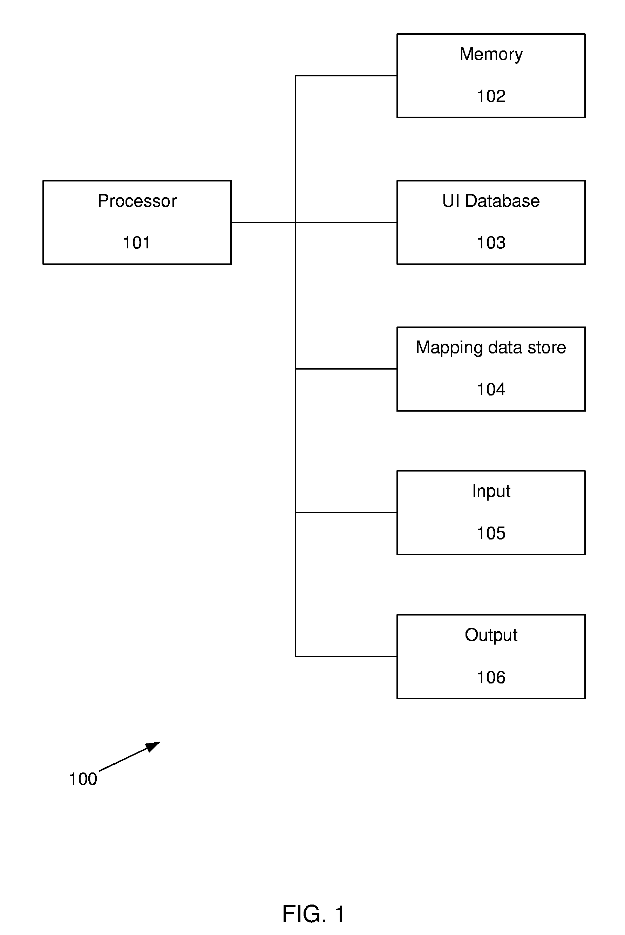

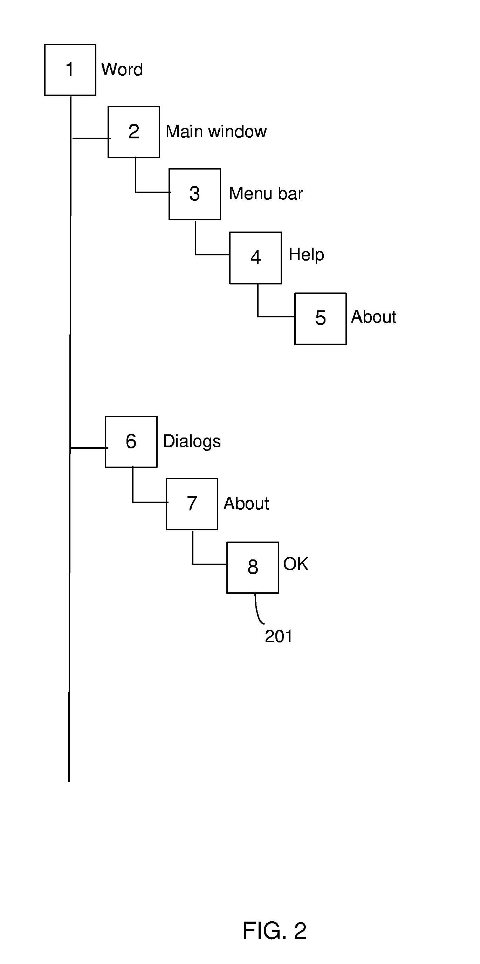

FIG. 1 is a schematic diagram of a test case management tool 100. The tool 100 comprises a processor 101 connected to a memory 102, a UI database 103, a mapping data store 104, an input 105 and an output 106. The memory 102 is arranged to stored executable instructions arranged to cause the processor to perform the methods described below. The UI database 103 comprises a model of the UI of a software product in a hierarchical and state independent manner. A graphical representation of such a model 200 is shown in FIG. 2. The model includes each element 201 of the UI e.g. dialogs, controls, menu bars etc. The mapping data store 104 comprises data mapping actions to elements of the UI (e.g. by reference to their element ID). It is this mapping data which defines the test cases for the particular software product, as will be explained in more detail below. The UI model and the mapping data may be generated manually by someone who is familiar with the software product (e.g. the software developer) or may be generated automatically. Further details on methods of automatic generation of the UI model are described below. The input 105 comprises means for receiving an input from a tester or a software product to specify the test case required. The input may, for example, comprise a port for receiving a signal from a mouse and / or keyboard or an interface to another software application. The output 106 comprises means for outputting a generated test case, for example to a tester (e.g. in paper or electronic form), to a storage device or to an application which may use the generated test case.

An example of an application which may use the generated test case is described in co-pending application EP 061 1 5360.7 filed 1 3 June 2006 entitled "Use of Context Information in Localisation". This application uses the generated test cases to step through a user interface and thereby enables context information relating to that software product to be collated.

It will be appreciated that the test case management tool shown in FIG. 1 is shown by way of example only and alternative test case management tools may comprise fewer or additional elements. It will also be appreciated that any of the three data storage elements 102 to 104 may be co-located or combined in any manner. It will be further appreciated that the elements of FIG. 1 may not be co-located and may be distributed across a network. For example, the UI database 103 and / or mapping data store 104 may be located remotely from the processor and may be accessed over a network. In an example, the UI database 103 may comprise a SQL server and the mapping data store 104 may comprise a web server.

Although the graphical representation of a model for a software application shown in FIG. 2 comprises several levels, it will be appreciated that the model may contain a hierarchy of just two levels: the parent (e.g. the dialog) and children (e.g. the controls within the dialog).

As described above, the mapping data maps a list of predetermined actions to elements of the UI. The actions may be identified by way of an action identifier (as shown in the table below). Such predetermined actions may include:

| Action ID | Action Description |
|---|---|
| 1 | Click |
| 2 | Type |
| 3 | Select |
| 4 | Double click |
| 5 | Launch |
| 6 | Run task |

An example test case may be to bring up the 'Help - About' dialog and in plain text this may comprise:
Boot Word
Click 'About' in the 'Help' menu
Click on 'OK' in the displayed dialog
In native format, referring to the UI model shown in FIG. 2, this test case may be written:
Launch → Word
Click → Main Window → Menu Bar → Help → About
Click → Dialog → About → OK
The mapping data may therefore comprise (referring again to the UI model of FIG. 2):

| Action | Element |
|---|---|
| 5 | 1 |
| 1 | 5 |
| 1 | 8 |

This mapping data provides a compact representation of the test case for a particular state of a UI element whilst being resilient to changes in the UI structure, as described below. As can be seen from the table above the mapping data provides data pairs, the first of the pair indicating an action and the second of the pair indicating an element or a task (as described in more detail below).

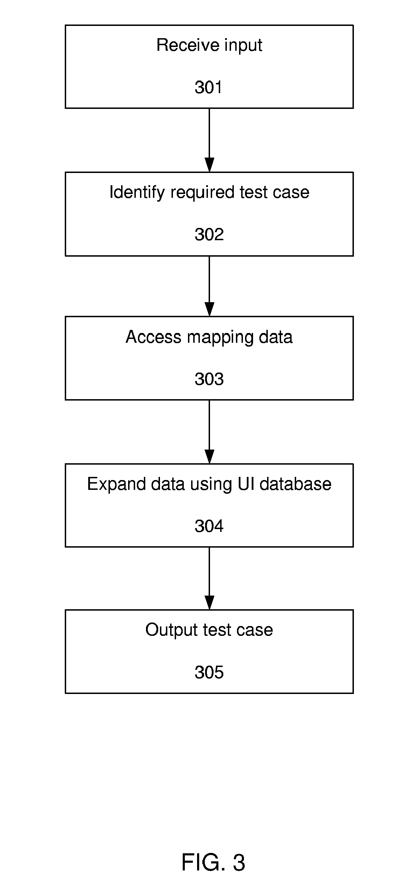

The generation of a test case by the test case management tool 100 can be described with reference to FIG. 3. An input is received (step 301) e.g. via the input 105. From this input, the required test case (or test) is identified (step 302) e.g. by way of a test case (or test) identifier. If the input is indicative of an element in the UI (e.g. a control, a string etc), the identification step may involve determining which test case (or test cases) expose the particular UI element (as described in more detail below). The input, in another example, may be indicative of a particular state of a dialog (or other UI element) and may be referenced by its state ID and the identification step may therefore require identifying the test case associated with that particular state ID. The input may alternatively directly reference a test case (e.g. test case 10).

The mapping data for the identified test case (or test cases) is accessed (step 303) e.g. from the mapping data store 104 and the data is expanded using the UI database 103 (step 304). This mapping data for the identified test case may be a subset of all the mapping data stored in the mapping data store 104 and associated with the software product. For example, if the mapping data comprises [5, 1], [1, 5], [1, 8] (where the format of each data pair is [action, element] and as shown in a different format in the table above), the expanded data (also referred to as the set of expanded mappings) may comprise:
Launch → Word
Click → Main Window → Menu Bar → Help → About
Click → Dialog → About → OK
This expanded test case (also referred to as test instructions) is then output (step 305) in the required format which may be the native format (as shown here), plain text (e.g. as shown above or as a Microsoft (trade mark) Word document), code (e.g. C# code) for use in an automated test routine or other structured representation.

The data may be expanded (in step 304) by, for each step:
- Expanding the ActionID to the Action Description (also referred to as the ActionName)
- Materialising the shortest path to the element from the current context.
Paths may be materialised by walking through the parent hierarchy chain from the source element (e.g. the "About" element), producing the full path (e.g. Main Window->Menu Bar->Help->About). However, to optimise the display of the steps and also speed up test case authoring the concept of "available context" may be stored for each step. If this optimisation is implemented, particular elements in the UI database are flagged as being "Modal" - this signifies that when this piece of UI is on screen the user cannot typically reach any siblings in the hierarchy, only children. An example is the "Font" dialog in Word: when a user brings this up they cannot interact with the menu system until they close the dialog. Using this concept, the following steps may be required to launch the font dialog:
Click->Main Window->Menu Bar->Format->Font
Then:
Click->Dialog->Font->Underline
This sets the context to the Font dialog. It is then possible to interact with other controls using a shortened syntax:
Click->Subscript
Click->OK
The "OK" element is flagged as being Modal Cancellation, so the full UI is available to the user again. So, for the expansion example above, for the Underline element the full path back to "Dialog" may be expanded; at this point "Font" is the context so expanding SubScript stops at the level underneath this node.

Where the test case is to be output as plain text, a set of rules or a template may be used to assist in the mapping of the expanded data to a readable plain text set of instructions. An example set of plain text conversion rules, written in XML, is shown below:
<PublicationRules>
<Rules>
<!-- actions to launch a modal dialog -->
<Rule>^[Act:Click],^+1 ([EI:Type=Window;Modal=True])>Click {Path} to launch the {0} Dialog</Rule>
<Rule>^[Act:DoubIeClick],^+1 ([EI:Type=Window;Modal=True]»Double Click {Path} to launch the {0} Dialog</Rule>
<!-- actions for manipulation of an dynamic item within a dropdown / list -->
<Rule>^[Act:Select],^[El:Name=Items;Virtual=True],^[EI:Type=ListView]>S elect '{Param0}' in the {Path-1 }List</Rule>
<Rule>^[Act:Select],^[EI:Name=Items;Virtual=True],^[EI:Type=ComboBox] >Select '{Param0}' in the {Path-1 } Dropdown</Rule>
<Rule>^[Act:Select],^[EI:Name=Items;Virtual=True],^[EI:Type=ListBox]>Se lect '{Param0}' in the {Path-1} List</Rule>
<Rule>^[Act:Type],^[EI:Name=Items;Virtual=True],^[EI:Type=ListView]>Ty pe "{Param0}" in to the {Path-1} List</Rule>
<Rule>^[Act:Type],^[EI:Name=Items;Virtual=True],^[EI:Type=ComboBox] >Type "{Param0}" in to the {Path-1}Dropdown</Rule>
<Rule>^[Act:Type],^[EI:Name=Items;Virtual=True],^[EI:Type=ListBox]>Ty pe "{Param0}" in to the {Path-1}List</Rule>
<!-- override rule for Launch and Activate: expand to nothing if current app and new app are the same -->
<Rule>^[Act:Launch],^-1 [Context:App={App}]></Rule>
<Rule>^[Act:Activate],^-1 [Context:App={App}]></Rule>
<!-- simple action rules -->
<Rule>^[Act:Click]>Click {Path}</Rule>
<Rule>^[Act:DoubleClick]>Double Click {Path}</Rule> <Rule>^[Act:EnsureVisible]>Ensure '{Path}' is Visible</Rule> <Rule>^[Act:Type]>Type {Param0} in to {Path}</Rule>
<Rule>^[Act:Check]>Check {Path}</Rule>
<Rule>^[Act:UnCheck]>Un Check {Path}</Rule>
<Rule>^[Act:Collapse]>Collapse {Path}</Rule>
<Rule>^[Act:RightClick]>Right Click {Path}</Rule> <Rule>^[Act:DoubIeRightClick]>Double Right Click {Path}</Rule> <Rule>^[Act:SelectNext]>Select Next {Path}</Rule>
<Rule>^[Act:SelectPrevious]>SelectPrevious {Path}</Rule>
<Rule>^[Act:Select]>Select {Path}</Rule>
<Rule>^[Act:DeselectAll]>DeselectAll {Path}</Rule>
<Rule>^[Act:Expand]>Expand{Path}</Rule>
<Rule>^[Act:Launch]>Launch {App}</Rule>
<Rule>A[Act:Say]>Say {Path}</Rule>
<Rule>^[Act:DragDrop]>Drag {Path}, Drop on to {Param0}</Rule>
<Rule>^[Act:Pause]>Pause{Path}</Rule>
<Rule>^[Act:Activate]>Set Focus To {App}</Rule>
</Rules>
</PublicationRules>
A set of rules may also be used to generate the code for an automated test routine, although depending upon the implementation the rules may be more complex than the example provided above (e.g. there may be several lines of code required for each action because variables may need to be defined etc).

Where the test case is output in code for use by an automated routine, the code may include additional information which may be obtained from the UI database or another database (not shown in FIG. 1). For example, the UI database may also include position details for each UI element such as the coordinates for a particular control. Such position information may be included in the test case code, for example as part of an instruction to move the mouse cursor and / or to simulate a mouse click. In another example, the code may include identification information for each UI element (e.g. the element ID and string information) which may be used at run time to find the control and interrogate it to find its on screen location (e.g. using the Windows API). This location information can then be used to move the mouse to the right location before performing any mouse clicks. Use of identification information may be beneficial as the coordinates may not be language neutral.

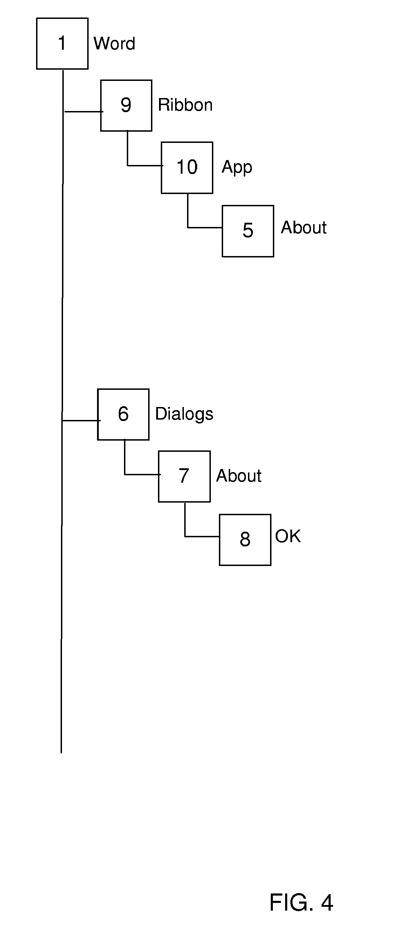

This method provides a quick and efficient method of generating test cases which by being referenced to a UI model can be updated easily and quickly. For example, if the software product is changed, e.g. from the UI model shown in FIG. 2 to the UI model shown in FIG. 4, the mapping data (as stored in the mapping data store 104) need not be changed, however, when the data is expanded (in step 304), the expanded data will expand the new path (using the new UI model) and may comprise:
Launch → Word
Click → Ribbon → App → About
Click → Dialogs → About - OK
A new test case can therefore be generated quickly and efficiently to reflect the change in UI model. In addition to changes in UI structure (including addition / removal of intermediate steps), UI terminology changes may be accommodated in a similar manner by updating the UI model.

In another example, however, the UI model may not include the names (e.g. strings) associated with each UI element, but may instead reference string (or element) IDs or use any other language independent reference. In such a situation, the expanded data may, for example, comprise:
Launch - #01
Click → #09 → #10 → #05
Click → #06 → #07 → #08
String information may then be accessed (e.g. from the UI database, a dynamic link library (DLL) or other data store) to obtain the actual strings if required, e.g. if the test case is to be output (in step 305) in plain text or native format. The actions may also be referenced using a different reference (e.g. an action ID rather than a descriptive word or phrase). In this example, the UI model and the initial expanded data may be terminology and/or language independent.

By referencing string (or element) IDs, either instead of (as above), or in addition to, the actual strings themselves, the test cases may be automatically generated in any language by accessing the appropriate language DLL, a localisation database or other store of strings in different languages. The test case may also be generated in a combination of languages, for example for where a localised version of an application is to be tested by a tester who is not proficient in the target language (e.g. the instructions may be in the tester's native language but any references to controls / strings within the application may be in the language of the application).

The methods described above may use a reference number for a UI element which is generated by calculating the hash of one or more parameters associated with the element, for example the filename, the element type and the element ID. Other examples include the element ID alone or the element ID and the value of the element. It may be necessary to use a combination of parameters, rather than just a single parameter, such as the element ID, because the element ID may not be unique across the entire software product. Hash functions map a large block of information, b, to an output h(b) typically of much smaller size. The hash function has the property that given a block b, it is computationally infeasible to find another block, b', with the same hash value, i.e. where h(b) = h(b'). Suitable hash functions for use in generation of a reference include SHA-1 (Secure Hash Algorithm-1), SHA-2, MD4 (Message Digest 4) and MD5. These hash functions are particularly effective in producing unique hashes where the original blocks of information are similar, which is often the case because the element IDs are often similar. More traditional hash functions (e.g. CRC32, a cyclic redundancy check algorithm) may be used; however, these may result in more collisions (i.e. non-unique hash values). The use of a hash function as the reference may beneficial because it is unique to the combination of element parameters used and it may be much smaller in size (e.g. a 32-bit number or a 128 to 160 bit digest which equates to a 8-10 character string of Unicode characters in the UI) than using the combination of parameters (which itself is a unique combination). Furthermore, the hash values remain constant across all builds or versions of a software product. These hash values may also be used in other methods, such as described in co-pending application EP 06115360.7, filed 13 June 2006, entitled "Use of Context Information in Localisation".

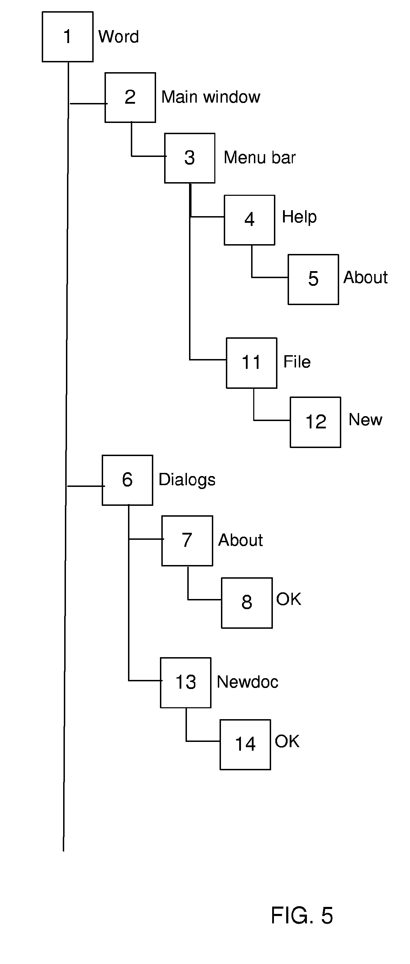

As described above, one of the predetermined actions may be to run a task (action 6 in the table shown above). Tasks may be defined where there are collections of common steps in many test cases, for example, in testing the application Microsoft Word (trade mark), the steps to start Word and open a new document may be included in a large number of test cases. Details of such tasks may be stored in the mapping database, and an example task may comprise:
Launch → Word
Click → File → New
Click → Newdoc - OK
This task may be stored with a reference (e.g. reference T1) and include the mapping data [5, 1], [1, 12], [1, 14] (as shown in the UI model of FIG. 5). The task may then be called in a test case using [6, T1]. When mapping data containing a task reference is expanded (in step 304), the task is also expanded (e.g. all the data pairs in the task are expanded in the same way as the other data pairs in a test case).

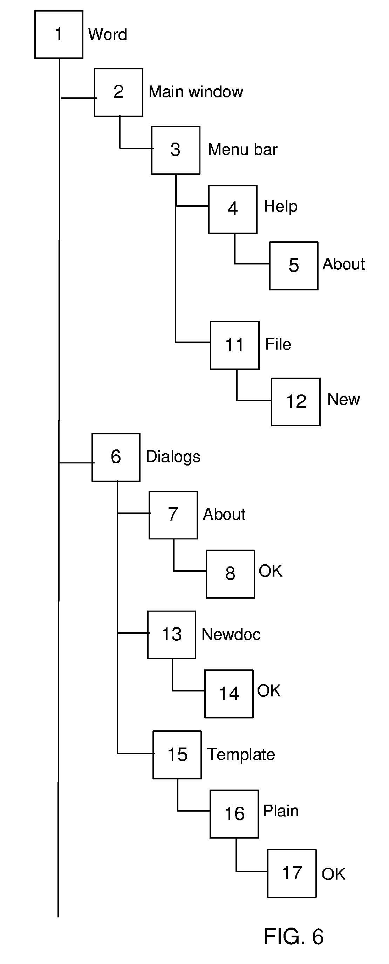

By saving these common actions as tasks within the mapping data, the ability to update test cases is further simplified. Should changes be required to the common action (which has been represented as a task) which cannot be accommodated by changes to the UI model and subsequent expansion of the mapping data, it is only necessary to update the mapping data for the task and not for each test case which includes the particular sequence of steps. For example if the task changes to:
Launch → Word
Click → File → New
Click → Newdoc - OK
Click → Template → Plain → OK
Then, the task T1 may be changed to [5, 1], [1, 12], [1, 14], [1, 17] (as shown in the UI model of FIG. 6), but test cases including [6, T1] need not be changed.

Furthermore, because of the structured nature of the mapping data, it may be possible to search for a particular sequence of steps (e.g. [5, 1], [1, 12], [1 , 14]) within the mapping data and to perform a replacement where the required step sequence changes (as shown in the example above). This provides a quick and efficient way of updating the test cases (by way of updating the mapping data) where the changes cannot be accommodated by provision of a new UI model and the expansion of the mapping data.

The UI model may be created manually or may be created automatically.
In a first example method of creating the UI model, the resource DLL is parsed to extract the the static structures of dialogs, menus and other UI elements. Although this method does not capture dynamic context as this is not available until runtime, it provides a basic UI model and ensures that the resource ID information (for generation of automated test cases and for possible creation of a localised version of the test case) is captured.

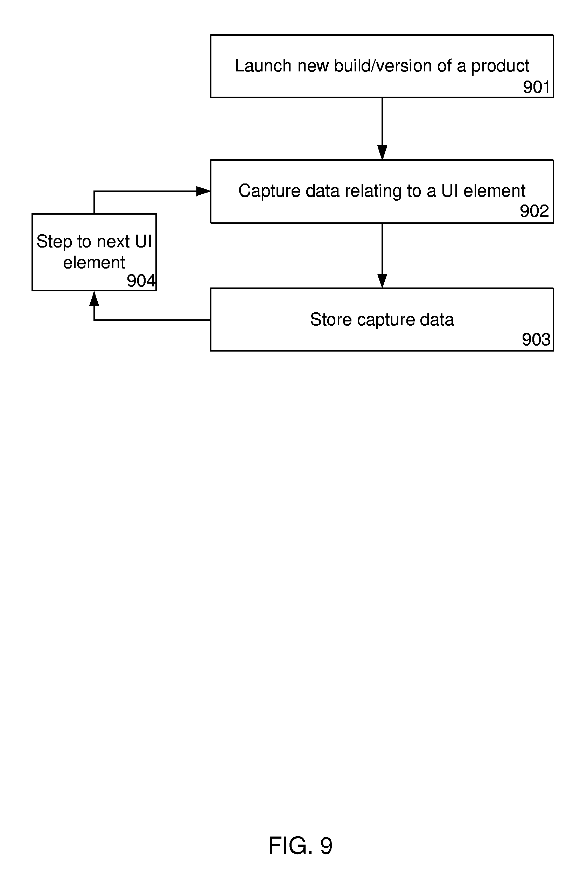

In a second example method, the UI model may be created in a semi-automated manner, in which a user brings up the target dialog and captures it. The data may be captured as shown in FIG. 9. The method comprises launching the software product and displaying a UI element such as a dialog, a menu, a toolbar, a tooltip, an error message etc (step 901) and capturing data relating to a UI element such as the UI elements contained within that UI element (step 902). This capturing process may be initiated by the user (e.g. using a hotkey) or may be automatic. The process may also capture additional information about the UI elements such as the location of each of the controls in the UI element (e.g. coordinates of the controls). This captured information is stored (step 903) and then the user brings up the next UI element (step 904) and the process (steps 901 -903) may be repeated. An example of the capturing process for a Win32 format dialog is shown below, in which an on screen window is identified by a transient "window handle" (HWND) within the system:
1. Capture a bitmap picture:
   - Find location of window using GetWindowRect() API.
   - Create a device context and bitmap object compatible with the window - CreateCompatibleDC()/CreatecompatibleBitmap()
   - copy the bits into the bitmap - BitBlt()
2. Enumerate the controls on the dialog and extract useful information:
   EnumChildWindows(HWND)
   Captions: GetWindowText(HWND of child)
   Location: GetWindowRect(HWND of child)
   Control ID: GetWindowLong(HWND of child)

The capturing process, described above, may be performed on a decorated build. The term 'decorated' is used herein to refer to the appending of a reference to the value of a resource. For example, the string "OK" may be decorated with a first reference, e.g. [ref1] such that the decorated resource (or decorated string) is "OK_[ref1]". The reference number used (e.g. [ref1]) may be generated by calculating the hash of one or more parameters associated with the resource, for example the filename, the resource type and the resource ID. The original strings may be stored in a file such as a dynamic link library (DLL) which may include the following information:

| | |
|---|---|
| Resource ID | String |
| idsOK | OK |
| idsAppName | Word |

The decorated strings, once created, may be stored in a revised file (e.g. a new DLL) which may include the decorated string instead of (or in addition to) the original string value:

| | |
|---|---|
| Resource ID | Decorated String |
| idsOK | OK_[ref1] |
| idsAppName | Word_[ref2] |

If the capturing process is performed on a decorated build, this revised file (e.g. the new DLL) is used when the software product is launched (e.g. in step 901). The term 'appending' is used herein to refer to the attaching or adding of a reference to a resource irrespective of how the attaching / adding occurs or where the attaching / adding occurs. For example the reference may be appended before, after or in the middle of the reference. In another example, the reference may be located elsewhere or hidden and linked to the resource.

Either of the methods described above for generation of the UI model may be used in combination with manual techniques (e.g. to add nodes into the model one at a time). In another example, the first method described above may be used to generate an initial model which may be augmented using the second example model (e.g. to include details of dynamic UI). The resultant model may require some manual additions of nodes or may be sufficient without further augmentation.

The test case management tool 100 may also be used to determine which test cases relate to which UI elements by searching the stored and / or expanded mapping data for some / all of the test cases stored in the mapping data store. This can be described with reference to the UI model shown in FIG. 5, where if, for example, the menu bar (element 3), is changed, the tool may search the mapping data store for test cases including element 5 or 12, as these are the elements at the end of the branches which pass through element 3. In another example, the tool may search the expanded data for test cases including element 3. Having identified which test cases relate to the changed UI element, these test cases may be run to check that the change has not introduced any defects. The search facility may also be used to identify which test cases need to be regenerated. For example, if the UI model is changed such that the steps leading to UI element 5 being displayed are changed, a search can be performed for test cases involving element 5 and then those test cases can be regenerated using the new UI model to expand the data (step 304).

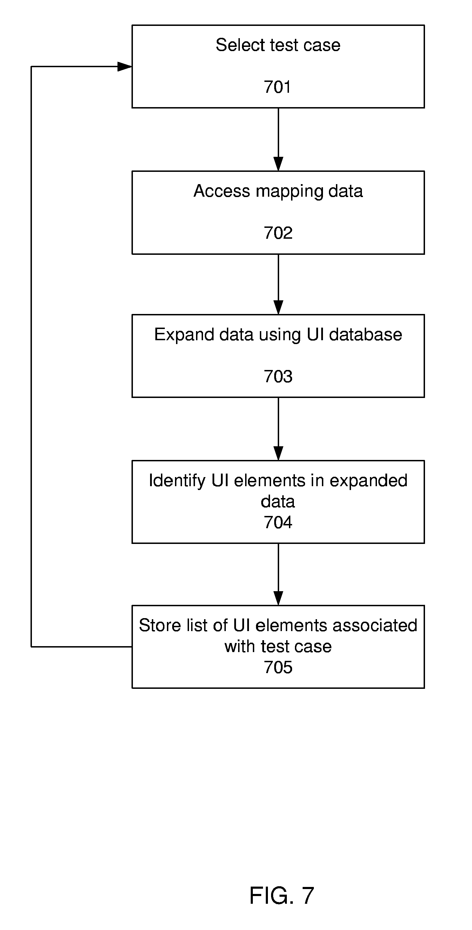

Instead of (or in addition to) performing a search for test cases associated with a UI element on a dynamic basis, the process described above may be performed for all UI elements to produce data mapping UI elements to test cases (or vice versa). Such data may be stored in the mapping data store 104 or in another storage location and subsequently referred to. This data may alternatively be compiled by iterating through each test case in the mapping data store 104, as can be described with reference to FIG. 7. A test case is selected (step 701) and mapping data for this test case is accessed (step 702), for example as described above with reference to step 303. The mapping data is expanded (step 703) using the UI database (e.g. as described above with reference to step 304) and the UI elements in the expanded data are identified (step 704) and stored associated with the test case (step 705), e.g. as shown below.

| Test case | UI elements |
|---|---|
| 1 | 1-8 |
| 2 | 1, 2, 3, 11-14 |
| 3 | 1, 5-10 |

The process (steps 701 -705) is then repeated for the other test cases in the mapping data store. The data mapping test cases and UI elements may be used to identify any UI elements which are not covered by test cases.

The data mapping test cases and UI elements may also be used when a new version of a software product is produced to determine which test cases should be generated (as shown in FIG. 3) and run. For example, if a cut-down version of an existing software product is developed, the product may only use some of the UI elements that are in the base product. In this situation, the test cases for those elements that are in the cut-down product can be identified from the test case to UI element mapping data (stored in step 705) obtained from analysis of the base product's test cases and then the new required test cases can be generated for the cut-down product (as shown in FIG. 3) using the new UI model for the cut-down product to expand the test case mapping data (in step 304).

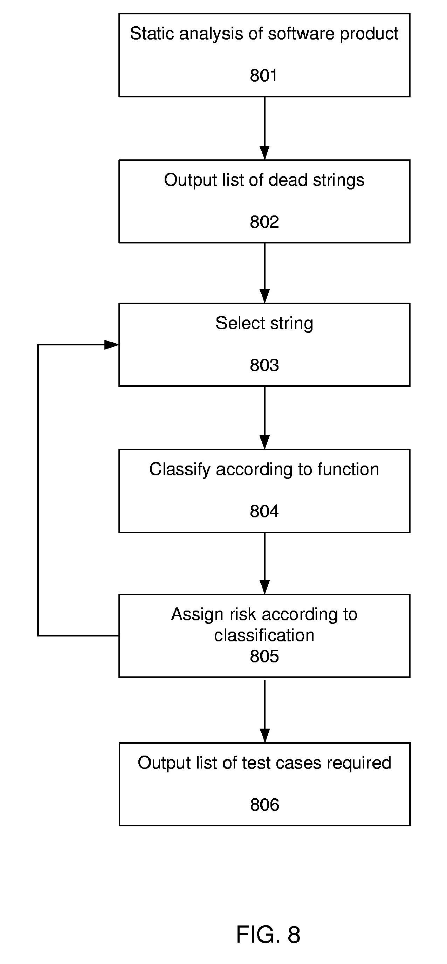

Although ideally all UI elements, such as strings, should be covered by a test case, this may not be feasible for large software products which may include hundreds of thousands of UI elements. Consequently, it may be beneficial to prioritise which UI elements should be covered by test cases. The mapping data, stored in the mapping data store 104, which maps UI elements and actions and defines the test cases, may be created following analysis of the UI model (stored in the UI database 103) to determine which UI elements need to be covered by test cases. An example process flow for such analysis is shown in FIG. 8. Static analysis is performed on the software product (step 801) in which the code is analysed without running it to identify any element IDs which relate to strings and which are listed but never referenced in executable code. These strings which are never referenced in executable code are referred to as 'dead strings' and a list of these is output (step 802). A string within the product (which is not a dead string) is then selected (step 803) and the code is searched to identify where the string is used in order to classify the string (step 804). For example, the string may be classified as being used:
- on a button
- in an alert
- in an error message
- in a function
Depending on the classification, a risk level is assigned to the string (step 805) using predefined criteria. For example, a string used on a button may be low risk, a string used in an alert may be assigned a zero risk level (indicating that no testing is required), whilst a string used in a function may be assigned a high risk. This process (steps 803-805) is then repeated for each of the strings and then a list of test cases required is generated based on the assigned risk levels and output (step 806). The risk level assigned may be numeric and the list of test cases may be generated to include all those strings with a risk level which exceeds a specified threshold.

Dead strings may be identified by searching the code for each string defined in the resources. However, this is a very lengthy process. In another example, dead strings may be identified by replacing the strings (or other UI elements) with constants and then using a compiler to identify constants which are defined an not used. In general, string IDs are represented with a macro definition in code as follows (assuming C++ source code):
#define idsSomeStringiD 1000

As the compiler runs it simply replaces any instance of "idsSomeStringID" with the number 1000; this is a preprocessing step so the compiler sees "1000" and the context is lost. However, by replacing the #define statement with constant statements, such as:
const int idsSomeStringID 1000;
the compiler itself deals with these definitions since "const" has a syntactical meaning of both variable type and "readonly" etc. It is then possible to run a product compilation passing a switch to the compiler that will warn when constants are defined but never referenced.

The classification of strings may be done using static code analysis. A basic "root" set of functions within the product that are known to display UI (e.g. the function "MessageBox") are determined. The static analysis is then used to determine if this function is called for certain resource IDs and so tag that string as being known to be passed to a Ul based function. This is also done for other classes e.g. if a string is passed to a Windows Registry API we know it has a functional significance. Strings may then be classed as 'UI only' or 'functional' with 'UI only' strings being assigned a low risk level whilst 'functional' strings are assigned a high risk level. This may be implemented using a private extension of the "Source Annotation" syntax (http://msdn2.microsoft.com/en-us/library/ms235402.aspx) to mark function parameters as being "UI String" for example.

In addition to (or instead of) identifying dead strings, the risk analysis process may also perform checks on each string to identify particular defects. For example, the string may be checked against a length criteria (e.g. to check that the length does not exceed 60 characters).

Although the flow diagram of FIG. 8 shows analysis of dead strings it will be appreciated that the analysis of the UI model may comprise only steps 803 to 806 and that the analysis of dead strings (steps 801, 802) may not be performed or may be performed separately.

It will be appreciated that although the above description refers to management of test cases from a single product that the test case management tool 100 could simultaneously map test cases from multiple products. The data relating to multiple products may be stored in the same UI database and mapping data store or alternatively multiple database and data stores may be provided.

It will be appreciated that although the expanded data is shown above in terms of strings which can be read and understood by a human reader, this is by way of example only and the expanded data may be represented in other ways including in code or machine readable steps etc.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

## Claims

1. A test case management tool (100) comprising:
a processor (101);
an output (106) for outputting a test case; and
a memory (102) arranged to store executable instructions arranged to cause the processor (101) to:
access a first data store (104) comprising mapping data associated with a software product, the software product comprising a user interface comprising a plurality of user interface elements and the mapping data comprising one or more data pairs associating an action identifier and a user interface element identifier, wherein each user interface element identifier is associated with one of the plurality of user interface elements;
identify subset of the mapping data in response to an input received;
access a second data store (103) comprising a model of the user interface, the model comprising the plurality of user interface element identifiers arranged in a hierarchical structure; and
create a test case based on the identified subset of the mapping data and the model.

2. A test case management tool according to claim 1, further comprising at least one of: the first data store (104) and the second data store (103).

3. A test case management tool according to claim 1 or 2, wherein the first data store and the second data store are combined.

4. A test case management tool according to any of the preceding claims, wherein the mapping data further comprises:
one or more additional data pairs, each additional data pair associating an additional action identifier and one of a plurality of task identifiers; and
data associating the task identifier with one or more data pairs associating an action identifier and a user interface element identifier.

5. A test case management tool according to any of the preceding claims, wherein the memory (102) is further arranged to store executable instructions arranged to cause the processor (101) to:
identify a subset of the mapping data associated with a first test;
expand each data pair in the subset of the mapping data associated with the first test based on the hierarchical structure of the model to create a set of expanded mappings associated with the first test, each expanded mapping comprising one or more user interface element identifiers;
identify the user interface element identifiers in each of the set of expanded mappings associated with the first test; and
store the identified user interface element identifiers associated with an identifier for the first test.

6. A test case management tool according to any of the preceding claims, wherein the memory (102) is further arranged to store executable instructions arranged to cause the processor (101) to:
select one of the plurality of user interface elements;
classify the selected user interface element based on the hierarchical structure of the model; and
assign a risk level associated with the selected user interface element based on the classification.

7. A test case management tool according to any of the preceding claims, wherein each action identifier is selected from a plurality of action identifiers, the plurality of action identifiers comprising identifiers for at least two of: click, type, select, double click, launch and run task.

8. A method of generating test instructions comprising:
accessing a first data store comprising mapping data associated with a software product, the software product comprising a user interface comprising a plurality of user interface elements and the mapping data comprising one or more data pairs associating an action identifier and a user interface element identifier, wherein each user interface element identifier is associated with one of the plurality of user interface elements;
identifying a subset of the mapping data in response to an input received;
accessing a second data store (103) comprising a model of the user interface, the model comprising the plurality of user interface element identifiers arranged in a hierarchical structure;
creating the test instructions based on the identified subset of the mapping data and the model.

9. A method according to claim 8, wherein the mapping data further comprises:
one or more additional data pairs, each additional data pair associating an additional action identifier and one of a plurality of task identifiers; and
data associating the task identifier with one or more data pairs associating an action identifier and a user interface element identifier.

10. A method according to claim 8 or 9, wherein creating the test instructions based on the identified subset of the mapping data and the model comprises:
expanding each data pair in the subset of the mapping data based on the hierarchical structure of the model to create a set of expanded mappings, each expanded mapping comprising one or more user interface element identifiers; and
creating the test instructions based on the set of expanded mappings.

11. A method according to claim 8 or 9, wherein creating the test instructions based on the identified subset of the mapping data and the model comprises:
expanding each data pair in the subset of the mapping data based on the hierarchical structure of the model to create a set of expanded mappings, each expanded mapping comprising one or more user interface element identifiers;
accessing data relating one or more of the user interface element identifiers in an expanded mapping; and
creating the test instructions based on the set of expanded mappings and the accessed data.

12. A method according to claim 11, wherein the data relating to one or more elements comprises one or more of: position data relating to the one or more user interface element identifiers and a library of strings in a selected language associated with the one or more user interface element identifiers.

13. A method according to any of claims 8-12, further comprising:
outputting the test instructions in plain text or in executable code.

14. A method according to any of claims 8-13, wherein each action identifier is selected from a plurality of action identifiers, the plurality of action identifiers comprising identifiers for at least two of: click, type, select, double click, launch and run task.

15. A computer program comprising computer program code means adapted to perform all the steps of any of claims 8-14 when said program is run on a computer.

16. A computer program as claimed in claim 1 5 embodied on a computer readable medium.
